(19) Europäisches Patentamt
European Patent Office
Office européen des brevets

(11) Veröffentlichungsnummer: **0 286 799**
**A2**

# (12) EUROPÄISCHE PATENTANMELDUNG

(21) Anmeldenummer: **88102266.9**

(22) Anmeldetag: **17.02.88**

(51) Int. Cl.4: **C08G 18/80 , C09D 3/72 , C08G 18/79**

(30) Priorität: **04.04.87 DE 3711374**

(43) Veröffentlichungstag der Anmeldung: **19.10.88 Patentblatt 88/42**

(84) Benannte Vertragsstaaten: **BE CH DE FR GB IT LI NL**

(71) Anmelder: **HÜLS AKTIENGESELLSCHAFT**
**- RSP Patente / PB 15 - Postfach 13 20**
**D-4370 Marl 1(DE)**

(72) Erfinder: **Gras, Rainer, Dr.**
**Im Ostholz 49 a**
**D-4630 Bochum 5(DE)**
Erfinder: **Wolf, Elmar, Dr.**
**Stauffenbergstrasse 7**
**D-4350 Recklinghausen(DE)**

## (54) Polyurethan-Pulverlacke, die nach Aushärtung eine matte Oberfläche ergeben.

(57) Matte Oberflächen werden meistens durch Zusatz von Füllstoffen zu Pulverlacken erreicht. Diese Zusätze bewirken eine Verschlechterung der lacktechnischen Eigenschaften. Die bekannten Bindemittelsysteme auf Basis cycloaliphatischer Diisocyanataddukte, die nach Aushärtung matte Oberflächen ergeben, sind entweder komplexer Art oder nur aufwendig herstellbar.

Diese Nachteile werden vermieden, wenn die PUR-Pulverlacke aus einerseits OH-Gruppen aufweisenden Polymeren und andererseits aus mit Epsilon-Caprolactam blockierten trans-1,4-Cyclohexandiisocyanataddukten bestehen.

Herstellung matter PUR-Beschichtungen

EP 0 286 799 A2

Xerox Copy Centre

## Polyurethan-Pulverlacke, die nach Aushärtung eine matte Oberfläche ergeben

Die Erfindung betrifft Polyurethan-Pulverlacke (PUR-Pulverlacke) auf Basis von mit Epsilon-Caprolactam blockierten trans-1,4-Cyclohexandiisocyanataddukten als Isocyanatkomponente, die nach Aushärtung eine matte Oberfläche ergeben.

Für viele Beschichtungen ist hoher Glanz nicht erwünscht. Dies kann mehrere Gründe haben, so z. B. erfordern glänzende Flächen ein weitaus höheres Maß an Reinigung als matte Flächen; weiterhin kann es z. B. auch aus sicherheitstechnischen Gründen wünschenswert sein, stark reflektierende Flächen zu vermeiden.

Das einfachste Prinzip, eine matte Oberfläche zu erhalten, besteht darin, dem Pulverlack je nach Ausmaß des gewünschten Matteffektes kleinere oder größere Mengen Füllstoffe, wie z. B. Kreide, feinverteiltes $SiO_2$ oder Bariumsulfat, beizumischen. Diese Zusätze bewirken jedoch eine Verschlechterung der lacktechnischen Filmeigenschaften, wie Haftung, Flexibilität, Schlagfestigkeit und Chemikalienbeständigkeit.

Pulverlacke auf Basis von cycloaliphatischen Diisocyanaten und OH-Gruppen enthaltenden Polymeren sind bekannt. Technisch am bedeutsamsten sind die Pulverlacke auf Basis von Addukten des Isophorondiisocyanats (IPDI).

Ganz gleich, ob man von Epsilon-Caprolactam blockierten Addukten aus IPDI und Kettenverlängerungsmitteln (vgl. DE-OSS 21 05 777 und 25 42 191) oder von Isocyanuratgruppen enthaltenden IPDI-Addukten (vgl. DE-OS 27 35 497) ausgeht, man erhält nach Aushärtung stets glänzende Oberflächen.

Es sind auch Pulverlacke auf Basis cycloaliphatischer Diisocyanataddukte bekannt, die nach Aushärtung matte Oberflächen ergeben. Diese weisen jedoch verschiedene Nachteile auf. So sind die in der DE-OS 33 28 133 beschriebenen uretdiongruppenhaltigen Härter nur aufwendig herstellbar und thermoempfindlich. Die DE-OS 32 32 463 beschreibt ein kompliziertes 3-Komponenten-Gemisch aus einer carboxylgruppenhaltigen Isocyanatkomponente, einer Alkoholkomponente und einem Epoxid.

Aus der nicht vorveröffentlichten deutschen Patentanmeldung P 35 36 017 ist bekannt, daß Pulvergemische mit Epsilon-Caprolactam blockiertem trans-1,4-Cyclohexandiisocyanat (CHDI) als Härter nach Aushärtung glänzende PUR-Beschichtungen ergeben.

Ziel der vorliegenden Erfindung war es, Pulverlacke auf Basis OH-Gruppen aufweisender Polymerer und cycloaliphatischer Diisocyanate, insbesondere trans-1,4-Cyclohexandiisocyanat, zu entwickeln, die nach Aushärtung eine matte Oberfläche ergeben und die erwähnten Nachteile nicht aufweisen.

Es wurden jetzt PUR-Pulverlacke gefunden, die diesen Anforderungen entsprechen und folgende Bindemittelkomponenten enthalten.

Als Isocyanatkomponente A werden verwendet:

A1 mit Epsilon-Caprolactam blockierte Addukte aus trans-1,4-Cyclohexandiisocyanat und Diolen und/oder Triolen und/oder

A2 ein mit Epsilon-Caprolactam blockiertes Trimerisat des trans-1,4-Cyclohexandiisocyanats,

A3 0-50 Gew.-% - bezogen auf die Gewichtsmenge der Komponenten A1 und A2 - mit Epsilon-Caprolactam blockiertes trans-1,4-Cyclohexandiisocyanat und/oder Isophorondiisocyanat.

Als Alkoholkomponente B werden aus der PUR-Chemie bekannte Polymere eingesetzt, die OH-Gruppen aufweisen.

Die Komponente A1 wird vorzugsweise unter Verwendung folgender Diole bzw. Triole hergestellt, wobei das NCO/OH-Äquivalentverhältnis einen Wert x von mindestens 2 und maximal 7 aufweist,

- Diole der Formel $HO - (CH_2)_n - OH$ mit $2 \leq n \leq 12$
- ethergruppenhaltige Alkylenglykole der Formel $HO - [-(CH_2)_p-O]_m - H$ mit $m = 2,3$ und $p = 2, 3$ und $4$
- Trimethylolpropan.

Bei der Umsetzung mit Epsilon-Caprolactam hat das NH/NCO-Äquivalentverhältnis einen Wert y von mindestens 0,8 und maximal 1,0.

Das blockierte CHDI-Trimerisat (A2) wird vorzugsweise durch Umsetzung von trimerisiertem CHDI mit Epsilon-Caprolactam bei einem NH/NCO-Äquivalentverhältnis z von mindestens 0,8 und höchstens 1,0 hergestellt.

Die Komponenten A und B werden vorzugsweise in einem solchen Verhältnis vereinigt, daß das OH/NCO-Verhältnis zwischen 1 : 0,9 und 1 : 1,1 liegt.

Die Komponente B ist vorzugsweise ein Polyester mit einem Schmelzpunkt von 70 bis 120 °C.

Die Herstellung der Isocyanatkomponente A1 ist problemlos. Sie erfolgt in zwei Stufen, wobei in der 1. Stufe CHDI mit dem Diol und/oder Triol so umgesetzt wird, daß pro OH-Äquivalent des Alkohols 2 bis 7, insbesondere 2 bis 4 NCO-Äquivalente CHDI zur Reaktion kommen. In der 2. Stufe erfolgt die Blockierung mit Epsilon-Caprolactam, wobei auf 1 NCO-Äquivalent 1 bis 0,8 Mole Epsilon-Caprolactam kommen. In der 1. Stufe werden die Reaktionskomponenten so lange bei 120 bis 160 °C erhitzt, bis der gewünschte NCO-Gehalt erreicht ist. Anschließend erfolgt bei 160 bis 180 °C die portionsweise Zugabe von Epsilon-Caprolactam, wobei es durchaus zweckmäßig ist, die Temperatur kurzfristig auf 200 bis 220 °C zu steigern, um so möglichst schnell eine homogene Schmelze zu erreichen. Danach wird das Reaktionsgemisch auf 170 °C abgekühlt und so lange bei dieser Temperatur gehalten, bis sein NCO-Gehalt < 0,7 % erreicht hat. Die Herstellung kann aber auch in umgekehrter Reihenfolge erfolgen. Danach wird CHDI zunächst mit Epsilon-Caprolactam und dann mit einem Di-und/oder Triol umgesetzt.

Für die Kettenverlängerung sind insbesondere folgende mehrwertige Alkohole geeignet

- Diole der allgemeinen Formel HO - R - OH, wobei R für einen aliphatischen Alkylenrest mit 2 bis 14 C-Atomen steht, der durch C(1-4)-Alkylgruppen substituiert sein kann. Bevorzugt sind die Diole, in denen R für den Rest - $(CH_2)_n$ -steht und n einen Wert zwischen 2 und 12 hat, sowie Neopentylglykol.
- ethergruppenhaltige Alkylenglykole der Formel
HO - $[-(CH_2)_p-O]_m$ -H mit m = 2, 3 und p = 2, 3 und 4
- Triole mit 4 bis 10 C-Atomen wie z. B. Trimethylolpropan
- Tris-(hydroxyethyl)-isocyanurat.

Die blockierten CHDI-Addukte schmelzen vorzugsweise bei 150 bis 220 °C und enthalten vorzugsweise 10 bis 20 % blockiertes NCO sowie 0 bis 4 % freies NCO.

Die Herstellung der isocyanuratgruppenhaltigen Addukte erfolgt ebenfalls in zwei Stufen, wobei in der 1. Stufe CHDI trimerisiert und im 2. Reaktionsschritt das Isocyanuratgruppen enthaltende Reaktionsgemisch so mit Epsilon-Caprolactam umgesetzt wird, daß pro NCO-Gruppenäquivalent 1 bis 0,8 Mole Epsilon-Caprolactam zur Reaktion kommen. Die Trimerisierung des CHDI erfolgt am besten in der Weise, daß zu dem auf 90 °C erhitzten CHDI der Katalysator, vorzugsweise ein quaternäres Ammoniumsalz (vgl. DE-OS 29 16 201), in Mengen von 0,5 bis 2,0 % zugegeben wird. Anschließend erwärmt sich das Reaktionsgemisch innerhalb weniger Minuten auf 120 bis 160 °C. Nach dem Erreichen des Temperaturmaximums ist die Reaktion beendet. Die Menge an Katalysator hängt von dem angestrebten Umsatz ab. Je höher dieser ist, desto höher ist die dafür benötigte Katalysatormenge. Bei sehr hohem Umsatz hat es sich als zweckmäßig erwiesen, in zwei Stufen zu trimerisieren, so daß in der 1. Stufe CHDI (50,6 % NCO) bis zu einem NCO-Gehalt von 35 bis 40 % trimerisiert wird, und dann in der 2. Stufe dieses Reaktionsgemisch durch erneute Katalysatorzugabe bis zu einem NCO-Gehalt von 25 bis 30 % trimerisiert wird. Die Epsilon-Caprolactam-Blockierung des Isocyanuratgruppen aufweisenden CHDI erfolgt wie oben beschrieben. Die so herge stellten Addukte weisen vorzugsweise einen Schmelzpunkt von 140 bis 220 °C auf und sind darüber hinaus durch einen Gehalt an Isocyanuratgruppen, berechnet als $(CO - N)_3$, von vorzugsweise 3 bis 15 % und einen Gehalt an blockierten NCO-Gruppen von vorzugsweise 8 bis 20 % gekennzeichnet.

Die soeben beschriebene Umsetzung kann auch in inerten Lösungsmitteln erfolgen. Bevorzugte Lösemittel sind Toluol, Essigester, Dimethylformamid, N-Methylpyrrolidon usw.

Als Isocyanatkomponente A3 kann schließlich auch mit Epsilon-Caprolactam blockiertes CHDI und/oder mit Epsilon-Caprolactam blockiertes IPDI eingesetzt werden. Der Anteil der Komponente A3 beträgt maximal 50 % der Gewichtsmenge der Komponenten A1 und A2. Es ist bevorzugt, als Isocyanatkomponente nur A1 oder A2 einzusetzen.

Man kann entweder die Komponenten A1, A2 und A3 getrennt herstellen und dann mischen. Es ist aber auch möglich, die Blockierung mit Gemischen von Zwischenprodukten der Komponenten A1, A2 und A3 durchzuführen und auf diese Weise unmittelbar das gewünschte Gemisch zu erhalten.

Als Komponente B der erfindungsgemäßen Pulverlacke eignen sich im Prinzip alle aus der Polyurethanchemie bekannten OH-Gruppen aufweisenden Polymeren. Bevorzugt sind die Polymeren, die fest sind und einen Schmelzpunkt zwischen 70 und 120 °C, vorzugsweise 80 bis 100 °C, aufweisen. Die OH-Zahl liegt üblicherweise zwischen 10 und 200, vorzugsweise zwischen 30 und 100.

Folgende Verbindungsklassen werden bevorzugt

- Polyester, insbesondere die Umsetzungsprodukte von mehrwertigen Alkoholen mit Polycarbonsäuren, bevorzugt Polyester auf Basis 2-und 3wertiger Alkohole und Dicarbonsäuren
- Polyepoxide, insbesondere die Umsetzungsprodukte von Bisphenol A mit Epichlorhydrin
- Polyacrylate, insbesondere solche mit einem Molekulargewicht von 300 bis 6 000.

Mit den erfindungsgemäßen Pulverlacken lassen sich in der Regel Glanzgrade bis zu 10, gemessen nach Gardner im GG 60° ∢, erreichen. Der Glanzgrad ist auf verschiedene Weise in weitem Bereich einstellbar:

- Beim Einsatz der Addukte A1 nimmt der Glanzgrad im allgemeinen mit zunehmenden Urethangruppengehalt (kleinerem NCO-Gehalt) ab;
- Beim Einsatz der isocyanuratgruppenhaltigen Addukte A2 ist der Glanzgrad um so höher, je kleiner der NCO-Gehalt ist.

- Beim Einsatz der Komponente A3 steigt der Glanzgrad im allgemeinen mit zunehmender Menge.

Das Mischungsverhältnis von hydroxylgruppenhaltigem Polymer und Isocyanatkomponente wird in der Regel so gewählt, daß auf eine OH-Gruppe 0,9 bis 1,1, bevorzugt 1,0 NCO-Gruppen, kommen.

Die Isocyanatkomponente wird mit den hydroxylgruppenhaltigen Polymeren und gegebenenfalls Katalysatoren, wie z. B. Dibutylzinndilaurat, Zinkoctoat und gegebenenfalls weiteren Zusätzen, wie Pigmenten, Füllstoffen und Verlaufsmitteln gemischt und in der Schmelze homogenisiert. Dies kann in geeigneten Aggregaten, wie z. B. beheizbaren Knetern, vorzugsweise jedoch durch Extrudieren, erfolgen, wobei Temperaturobergrenzen von 130 °C nicht überschritten werden sollten. Die extrudierte Masse wird nach Abkühlung auf Raumtemperatur und nach geeigneter Zerkleinerung zu einem Pulverlack gemahlen. Das Auftragen der so hergestellten Pulverlacke auf geeignete Substrate kann nach den bekannten Verfahren, wie z. B. durch elektrostatisches Pulversprühen, Wirbelsintern, elektrostatisches Wirbelsintern, erfolgen. Nach dem Auftragen des Pulverlackes nach einem der genannten Verfahren werden die beschichteten Werkstücke zur Aushärtung 40 bis 10 Minuten auf eine Temperatur von 160 bis 220 °C, vorzugsweise 30 bis 10 Minuten bei 170 bis 200 °C, erhitzt.

Die so hergestellten Lacke zeichnen sich durch die von den PUR-Pulverlacken bekannt guten lacktechnischen Eigenschaften aus.

## A. Herstellung der erfindungsgemäß einzusetzenden Härter

### A I Allgemeine Herstellung der urethangruppenhaltigen Härter (I)

CHDI und das Polyol werden bei 120 bis 160 °C so lange miteinander erhitzt, bis alle OH-Gruppen umgesetzt sind. Anschließend wird die Epsilon-Caprolactammenge portionsweise bei 180 °C zugegeben. Um möglichst schnell eine homogene Schmelze zu erreichen, hat es sich als zweckmäßig erwiesen, das Reaktionsgemisch kurz auf 200 bis 220 °C zu erhitzen. Danach wird auf 180 °C abgekühlt und so lange bei dieser Temperatur gehalten, bis der berechnete NCO-Gehalt erreicht ist.

Nach diesem Verfahren wurden die in der Tabelle 1 aufgeführten Härter 1-12 hergestellt.

Tabelle 1: Epsilon-Caprolactam blockierte urethangruppenhaltige CHDI-Addukte

| Beisp. Nr. | Mole | | | Latenter NCO-Geh. % NCO | Freier NCO-Geh. % NCO | Schmelz-bereich °C |
|---|---|---|---|---|---|---|
| | CHDI | Polyol | Epsilon-Caprolactam | | | |
| 1 | 2 | 1 Ethylenglykol | 1,75 | 14,0 | 1,6 | 210 |
| 2 | 2 | 1 " | 2 | 13,1 | <0,5 | >200 |
| 3 | 2 | 1 Butandiol-1.4 | 2 | 12,6 | <0,6 | 200 |
| 4 | 2 | 1 Diethylenglykol | 2 | 11,6 | <0,5 | 180-188 |
| 5 | 2 | 1 Hexandiol-1.6 | 2 | 12,2 | <0,5 | >200 |
| 6 | 2 | 1 Dodecandiol-1.12 | 2 | 10,9 | <0,7 | >200 |
| 7 | 4 | 1 " | 6 | 15,0 | <0,7 | 160-162 |
| 8 | 4 | 1 " | 5 | 16,4 | 3,0 | 169-171 |
| 9 | 4 | 1 Neopentylglykol | 6 | 17,3 | <0,5 | 200 |
| 10 | 6 | 1 Trimethylolpropan | 9 | 17,4 | <0,5 | 186-188 |
| 11 | 4 | 1 " | 5 | 14,6 | <0,6 | 168-170 |
| 12 | 6 | 1 " | 7,75 | 16,9 | 2,5 | 169-171 |

A II Allgemeine Herstellung der isocyanuratgruppenhaltigen Härter (II)

Zu dem auf 90 °C erhitzten CHDI werden je nach angestrebtem Umsatz 0,5 bis 2 % DABCO® TMR 2 (Trimethyl-beta-hydroxypropyl-ammoniumformiat) gegeben. Dabei steigt die Temperatur innerhalb weniger Minuten auf 120 bis 160 °C. Nach Erreichen des Temperaturmaximums ist die Reaktion beendet. Die Epsilon-Caprolactam-Blockierung erfolgt dann analog zu der für die urethangruppenhaltigen Härter beschriebenen allgemeinen Herstellungsvorschrift.
Nach dieser Herstellungsvorschrift werden die in der Tabelle 2 aufgeführten Härter 13-17 hergestellt.

Tabelle 2: Epsilon-Caprolactam blockierte isocyanuratgruppenhaltige CHDI-Addukte

| Beisp. Nr. | % NCO des trimerisierten CHDI | Mole Epsilon-Caprolactam pro NCO-Äquivalent des trim. CHDI | Latenter NCO-Geh. % NCO | Freier NCO-Geh. % NCO | Schmelzbereich °C |
|---|---|---|---|---|---|
| 13 | 26,2 | 1 | 15,3 | <0,5 | 168-170 |
| 14 | 25,7 | 0,8 | 16,1 | 2,5 | 171-173 |
| 15 | 30,4 | 1 | 16,36 | <0,7 | 178-180 |
| 16 | 34,0 | 1 | 17,7 | <0,7 | 185 |
| 17 | 40,0 | 1 | 19,3 | <0,7 | 200-202 |

Beispiel 18

470 Gew.-T. trimerisiertes CHDI mit einem NCO-Gehalt von 29,6 % wurden mit 77 Gew.-T. IPDI bei 150 °C gemischt. Zu diesem Gemisch wurden bei 180 °C portionsweise 450 Gew.-T. Epsilon-Caprolactam zugegeben. Nach Beendigung der Epsilon-Caprolactamzugabe wurde das Reaktionsgemisch noch so lange bei 170 °C weitererhitzt, bis sein NCO-Gehalt <0,7 % erreicht hatte. Das Reaktionsprodukt hatte einen Schmelzpunkt von 148 bis 150 °C und einen latenten NCO-Gehalt von 16,4 %.

Beispiel 19

231 Gew.-T. trimerisiertes CHDI mit einem NCO-Gehalt von 29,2 % wurden mit 291 Gew.-T. IPDI gemischt und mit 478 Gew.-T. Epsilon-Caprolactam in der im Beispiel 18 beschriebenen Weise blockiert. Das Reaktionsprodukt hatte einen Schmelzpunkt von 76 bis 78 °C und einen latenten NCO-Gehalt von 17,3 %.

Beispiel 20 (Vergleich)

444 Gew.-T. IPDI wurden bei 80 °C mit 106 Gew.-T. Diethylenglykol so lange erhitzt, bis der NCO-Gehalt 15,2 % erreicht hatte. Danach wurden bei 120 °C 226 Gew.-T. Epsilon-Caprolactam portionsweise zugegeben. Nach der Epsilon-Caprolactamzugabe wurde das Reaktionsgemisch so lange bei 120 °C erhitzt, bis sein NCO-Gehalt <0,7 erreicht hatte. Das Reaktionsprodukt hatte einen Schmelzpunkt von 73 bis 76 °C und einen latenten NCO-Gehalt von 10 %.

Beispiel 21 (Vergleich)

888 Gew.-T. IPDI wurden mit 134 Gew.-T. Neopentylglykol bei 80 °C so lange erhitzt, bis der NCO-Gehalt von 26,5 % erreicht war. Danach wurden bei 130 °C 678 Gew.-T. Epsilon-Caprolactam portionsweise zugegeben und so lange weitererhitzt, bis der NCO-Gehalt auf ca. 0,5 % gesunken war. Das Reaktionsprodukt hatte einen Schmelzpunkt von ~70 °C und einen latenten NCO-Gehalt von 14,8 %.

Beispiel 22 (Vergleich)

1 000 Gew.-T. IPDI wurden mit 5 Gew.-T. DABCO/Propylenoxid (Gew.-Verh. = 1 : 2) 4 h bei 120 °C erhitzt. Nach dieser Zeit hatte das Reaktionsgemisch einen NCO-Gehalt von 26 % erreicht. Nun wurden unter intensiver Rührung portionsweise 700 Gew.-T. Epsilon-Caprolactam zugegeben und so lange bei 120 bis 130 °C weitererhitzt, bis der NCO-Gehalt des Reaktionsgemisches < 0,7 % erreicht hatte. Das Reaktionsprodukt hatte einen Schmelzpunkt von 84 bis 87 °C und einen latenten NCO-Gehalt von 15 %.

Beispiel 23 (Vergleich)

Zu 1 000 Gew.-T. des gemäß DE-OS 29 16 201, Beispiel 30, hergestellten trimeren IPDI mit einem Monomergehalt von 0,6 % und einem NCO-Gehalt von 17,4 % wurden bei 170 °C 468 Gew.-T. Epsilon-Caprolactam portionsweise gegeben. Nach Beendigung der Epsilon-Caprolactamzugabe wurde noch so lange weitererhitzt, bis der NCO-Gehalt auf < 0,7 % gefallen war. Das Reaktionsprodukt hatte einen Schmelzpunkt von 155 bis 160 °C und einen latenten NCO-Gehalt von 11,5 %.

B. Polyolkomponente

Allgemeine Herstellungsvorschrift

Die Ausgangskomponenten - Terephthalsäure (Ts), Dimethylterephthalat (DMT), Hexandiol-1,6 (HD), Neopentylglykol (NPG), 1,4-Dimethylolcyclohexan (DMC) und Trimethylolpropan (TMP) - werden in einen Reaktor gegeben und mit Hilfe eines Ölbades erwärmt. Nachdem die Stoffe zum größten Teil aufgeschmolzen sind, werden bei einer Temperatur von 160 °C 0,05 Gew.-% Di-n-butylzinnoxid als Katalysator zugesetzt. Die erste Methanolabspaltung tritt bei einer Temperatur von ca. 170 °C auf. Innerhalb 6 bis 8 h wird die Temperatur auf 220 bis 230 °C erhöht und innerhalb weiterer 12 bis 15 h die Reaktion zu Ende geführt. Der Polyester wird auf 200 °C abgekühlt und durch Anlegen von Vakuum (1,33 mbar) innerhalb 30 bis 45 min weitgehend von flüchtigen Anteilen befreit. Während der gesamten Reaktionszeit wird das Sumpfprodukt gerührt und ein schwacher $N_2$-Strom durch das Reaktionsgemisch geleitet.

Folgende Tabelle 3 gibt Polyesterzusammensetzungen und die entsprechenden physikalischen und chemischen Kenndaten wieder.

Tabelle 3

Polyester

| Beispiel | Ausgangskomponenten Ts Mol | DMT Mol | HD Mol | NPG Mol | DMC Mol | TMP Mol | Chemische und physikalische Kenndaten OH-Zahl mg KOH/g | Säurezahl mg KOH/g | Schmelzpunkt °C | DTA+ °C | Viskosität b. 160 °C mPa·s |
|---|---|---|---|---|---|---|---|---|---|---|---|
| 1 | 10 | 10 | 6,25 | 10,5 | 2 | 2,9 | 55-60 | 3-4 | 75 | 50 | ~25 000 |
| 2 | 9 | 9 | 3 | 13 | 3 | 1 | 50-56 | 3-4 | 70 | 50 | ~10 000 |
| 3 | Polyester der Fa. Hoechst ALFTALAT$^R$ AN 739 | | | | | | 55-60 | 2-3 | 70 | 50 | ~28 000 |
| 4 | Polyester der Fa. Bayer CRELAN$^R$ U 502 | | | | | | 45-55 | $<10$ | 75-79 | 47-57 | ~23 400 |

+ Glasumwandlungstemperatur

C. Polyurethan-Pulverlacke

Allgemeine Herstellungsvorschrift

Die gemahlenen Produkte, Vernetzer, Polyester, Verlaufmittel-ggf. Katalysator-Masterbatch, werden gegebenenfalls mit dem Weißpigment und gegebenenfalls Füllstoffen, in einem Kollergang innig vermischt und anschließend im Extruder bei 90 bis 130 °C homogenisiert. Nach dem Erkalten wird das Extrudat gebrochen und mit einer Stiftmühle auf eine Korngröße < 100 µm gemahlen. Das so hergestellte Pulver wird mit einer elektrostatischen Pulverspritzanlage bei 60 kV auf entfettete, gegebenenfalls vorbehandelte Eisenbleche appliziert und in einem Umlufttrokkenschrank bei Temperaturen zwischen 160 und 200 °C eingebrannt.

Verlaufmittel-Masterbatch

Es werden 10 Gew.-% des Verlaufmittels - ein handelsübliches Copolymeres von Butylacrylat und 2-Ethylhexylacrylat - in dem entsprechenden Polyester in der Schmelze homogenisiert und nach dem Erstarren zerkleinert.

Katalysator-Masterbatch

Es werden 5 Gew.-% des Katalysators, hier Di-n-butylzinndilaurat in dem entsprechenden Polyester in der Schmelze homogenisiert und nach dem Erstarren zerkleinert.

Die Abkürzungen in den folgenden Tabellen bedeuten:

SD = Schichtdicke in µm
HB = Härte nach Buchholz (DIN 53 153)
ET = Tiefung nach Erichsen in mm (DIN 53 156)
GS = Gitterschnittprüfung (DIN 53 151)
GG 60 ° ∢ = Messung des Glanzes nach Gardner (ASTM-D 523)
Imp. rev. = Impact reverse in g m

Beispiel 1

Pigmentierter Lack

Nach dem beschriebenen Verfahren wurde der Pulverlack mit folgender Rezeptur hergestellt, appliziert und zwischen 180 und 200 °C eingebrannt.

412,3 Gew.-T. Polyester gemäß Beispiel B1
137,7 Gew.-T. Vernetzer gemäß Beispiel A1
400,0 Gew.-T. Weißpigment ($TiO_2$)
50,0 Gew.-T. Verlaufmittel-Masterbatch

| Einbrenn-bedingungen Zeit / Temp. | Mechanische Kenndaten SD | HB | ET | GS | Imp. rev. | GG 60°*) |
|---|---|---|---|---|---|---|
| 15'/ 200 °C | 50-60 | 100 | 6.4-7.3 | 0 | 460.8 | 18 |
| 20'/ 200 °C | 60 | 100 | 7.2-7.7 | 0 | 460.8 | 20 |
| 25'/ 200 °C | 50-60 | 100 | 8.7-9.0 | 0 | 806.4 | 17 |
| 25'/ 180 °C | 40-60 | 91 | 3.8-4.0 | 0 | 460.8 | 20 |
| 30'/ 180 °C | 50-60 | 100 | 3.9-4.7 | 0 | 230.4 | 20 |

Beispiel 2

Pigmentierter Lack

Nach dem beschriebenen Verfahren wurde der Pulverlack mit folgender Rezeptur hergestellt, appliziert und zwischen 180 und 200 °C eingebrannt.

402,4 Gew.-T. Polyester gemäß Beispiel B1
147,6 Gew.-T. Vernetzer gemäß Beispiel A2
400,0 Gew.-T. Weißpigment ($TiO_2$)
50,0 Gew.-T. Verlaufmittel-Masterbatch

| Einbrenn-bedingungen Zeit / Temp. | Mechanische Kenndaten SD | HB | ET | GS | Imp. rev. | GG 60°*) |
|---|---|---|---|---|---|---|
| 15'/ 200 °C | 50-60 | 100 | 4.4-5.3 | 0 | 115.2 | 22 |
| 20'/ 200 °C | 50-60 | 100 | 6.1-6.4 | 0 | 230.4 | 23 |
| 25'/ 200 °C | 70 | 100 | 5.9-6.5 | 0 | 230.4 | 24 |
| 25'/ 180 °C | 60-80 | 100 | 3.1-3.3 | 0 | 115.2 | 26 |
| 30'/ 180 °C | 50-60 | 100 | 3.8-4.1 | 0 | 115.2 | 24 |

Beispiel 3

Pigmentierter Lack

Nach dem beschriebenen Verfahren wurde der Pulverlack mit folgender Rezeptur hergestellt, appliziert und zwischen 170 und 200 °C eingebrannt.

388,4 Gew.-T. Polyester gemäß Beispiel B1
161,6 Gew.-T. Vernetzer gemäß Beispiel A4
400,0 Gew.-T. Weißpigment ($TiO_2$)
50,0 Gew.-T. Verlaufmittel-Masterbatch

| Einbrenn-bedingungen | Mechanische Kenndaten | | | | | |
|---|---|---|---|---|---|---|
| Zeit / Temp. | SD | HB | ET | GS | Imp. rev. | GG 60°* |
| 12'/ 200 °C | 40-50 | - | 7.8-8.3 | 0 | >944.6 | 18 |
| 15'/ 200 °C | 60-70 | - | 9.5-9.6 | 0 | >944.6 | 20 |
| 20'/ 200 °C | 70-80 | - | 9.6->10 | 0 | >944.6 | 20 |
| 20'/ 180 °C | 50-60 | - | 5.4-7.2 | 0 | >944.6 | 16 |
| 25'/ 180 °C | 60 | - | 9.1-9.3 | 0 | >944.6 | 17 |
| 30'/ 180 °C | 60-80 | - | 8.3-9.0 | 0 | >944.6 | 19 |
| 25'/ 170 °C | 50-60 | - | 5.0-5.5 | 0 | >944.6 | 17 |
| 30'/ 170 °C | 50-60 | | 6.2-7.2 | 0 | >944.6 | 17 |

Beispiel 4

Pigmentierter Lack

Nach dem beschriebenen Verfahren wurde der Pulverlack mit folgender Rezeptur hergestellt, appliziert und zwischen 180 und 200 °C eingebrannt.

394,1 Gew.-T. Polyester gemäß Beispiel B1
155,9 Gew.-T. Vernetzer gemäß Beispiel A5
400,0 Gew.-T. Weißpigment ($TiO_2$)
50,0 Gew.-T. Verlaufmittel-Masterbatch

| Einbrenn-bedingungen Zeit / Temp. | Mechanische Kenndaten SD | HB | ET | GS | Imp. rev. | GG 60°* |
|---|---|---|---|---|---|---|
| 15'/ 200 °C | 60-80 | 111 | 3.8-4.0 | 0 | 230.4 | 21 |
| 20'/ 200 °C | 70-80 | 111 | 4.0-4.8 | 0 | 115.2 | 24 |
| 25'/ 200 °C | 50-70 | 111 | 4.0-5.0 | 0 | 230.4 | 24 |
| 25'/ 180 °C | 50-60 | 111 | 5.4-6.0 | 0 | 115.2 | 21 |
| 30'/ 180 °C | 60-70 | 100 | 4.8-5.2 | 0 | 115.2 | 24 |

Beispiel 5

Pigmentierter Lack

Nach dem beschriebenen Verfahren wurde der Pulverlack mit folgender Rezeptur hergestellt, appliziert und zwischen 180 und 200 °C eingebrannt.

380,9 Gew.-T. Polyester gemäß Beispiel B1
169,1 Gew.-T. Vernetzer gemäß Beispiel A6
400,0 Gew.-T. Weißpigment ($TiO_2$)
50,0 Gew.-T. Verlaufmittel-Masterbatch

| Einbrenn-bedingungen Zeit / Temp. | Mechanische Kenndaten SD | HB | ET | GS | Imp. rev. | GG 60°* |
|---|---|---|---|---|---|---|
| 15'/ 200 °C | 65-70 | 100 | 4.0-6.0 | 0 | 576.0 | 14 |
| 20'/ 200 °C | 60-70 | 100 | 7.8-9.6 | 0 | >944.6 | 14 |
| 25'/ 200 °C | 70-80 | 100 | 8.4-8.5 | 0 | >944.6 | 14 |
| 25'/ 180 °C | 60-80 | 100 | 4.8-5.0 | 0 | 576.0 | 12 |
| 30'/ 180 °C | 70-80 | 100 | 5.3-6.0 | 0 | 576.0 | 13 |

Beispiel 6

Pigmentierter Lack

Nach dem beschriebenen Verfahren wurde der Pulverlack mit folgender Rezeptur hergestellt, appliziert und zwischen 180 und 200 °C eingebrannt.

375,5 Gew.-T. Polyester gemäß Beispiel B3
174,5 Gew.-T. Vernetzer gemäß Beispiel A6
400,0 Gew.-T. Weißpigment ($TiO_2$)
50,0 Gew.-T. Verlaufmittel-Masterbatch

| Einbrenn-bedingungen | Mechanische Kenndaten | | | | | |
|---|---|---|---|---|---|---|
| Zeit / Temp. | SD | HB | ET | GS | Imp. rev. | GG 60°* |
| 15'/ 200 °C | 70-80 | 100 | 7.3-7.4 | 0 | 806.4 | 13 |
| 20'/ 200 °C | 60-70 | 111 | 8.1-9.6 | 0 | 691.2 | 13 |
| 25'/ 200 °C | 70-90 | 125 | 7.5-9.1 | 0 | 806.4 | 14 |
| 20'/ 180 °C | 55-60 | 100 | 3.9-4.2 | 0 | 460.8 | 10 |
| 25'/ 180 °C | 60 | 111 | 3.7-4.2 | 0 | 230.4 | 9 |
| 30'/ 180 °C | 60-65 | 125 | 6.2-6.9 | 0 | 460.8 | 10 |

Beispiel 7

Pigmentierter Lack

Nach dem beschriebenen Verfahren wurde der Pulverlack mit folgender Rezeptur hergestellt, appliziert und zwischen 180 und 200 °C eingebrannt.

417,0 Gew.-T. Polyester gemäß Beispiel B1
124,0 Gew.-T. Vernetzer gemäß Beispiel A7
400,0 Gew.-T. Weißpigment ($TiO_2$)
50,0 Gew.-T. Verlaufmittel-Masterbatch

| Einbrenn-bedingungen Zeit / Temp. | Mechanische Kenndaten SD | HB | ET | GS | Imp. rev. | GG 60°* |
|---|---|---|---|---|---|---|
| 15'/ 200 °C | 50-65 | 100 | >10 | 0 | >944.6 | 52 |
| 20'/ 200 °C | 50-65 | 111 | >10 | 0 | >944.6 | 53 |
| 25'/ 200 °C | 40-50 | 111 | >10 | 0 | >944.6 | 51 |
| 25'/ 180 °C | 50-70 | 100 | >10 | 0 | >944.6 | 54 |
| 30'/ 180 °C | 50-60 | 100 | >10 | 0 | >944.6 | 53 |

Beispiel 8

Pigmentierter Lack

Nach dem beschriebenen Verfahren wurde der Pulverlack mit folgender Rezeptur hergestellt, appliziert und zwischen 180 und 200 °C eingebrannt.

417,0 Gew.-T. Polyester gemäß Beispiel B1
133,0 Gew.-T. Vernetzer gemäß Beispiel A7
400,0 Gew.-T. Weißpigment ($TiO_2$)
50,0 Gew.-T. Verlaufmittel-Masterbatch

| Einbrenn-bedingungen Zeit / Temp. | Mechanische Kenndaten SD | HB | ET | GS | Imp. rev. | GG 60°* |
|---|---|---|---|---|---|---|
| 15'/ 200 °C | 40-60 | 111 | >10 | 0 | >944.6 | 56 |
| 20'/ 200 °C | 40-55 | 100 | >10 | 0 | >944.6 | 56 |
| 25'/ 200 °C | 40-60 | 100 | >10 | 0 | >944.6 | 57 |
| 20'/ 180 °C | 40-50 | 111 | 9.5-9.7 | 0 | 806.4 | 56 |
| 25'/ 180 °C | 40-50 | 125 | >10 | 0 | >944.6 | 57 |
| 30'/ 180 °C | 50-60 | 111 | >10 | 0 | >944.6 | 57 |

Beispiel 9

Pigmentierter Lack

Nach dem beschriebenen Verfahren wurde der Pulverlack mit folgender Rezeptur hergestellt, appliziert und zwischen 170 und 200 °C eingebrannt.

425,7 Gew.-T. Polyester gemäß Beispiel B1
124,3 Gew.-T. Vernetzer gemäß Beispiel A8
400,0 Gew.-T. Weißpigment ($TiO_2$)
50,0 Gew.-T. Verlaufmittel-Masterbatch

| Einbrenn-bedingungen | Mechanische Kenndaten | | | | | |
|---|---|---|---|---|---|---|
| Zeit / Temp. | SD | HB | ET | GS | Imp. rev. | GG 60°* |
| 15'/ 200 °C | 50-60 | 100 | >10 | 0 | >944.6 | 55 |
| 20'/ 200 °C | 50 | 100 | >10 | 0 | >944.6 | 57 |
| 25'/ 200 °C | 50-75 | 100 | >10 | 0 | >944.6 | 58 |
| 20'/ 180 °C | 50-60 | 100 | >10 | 0 | >944.6 | 57 |
| 25'/ 180 °C | 50-65 | 100 | >10 | 0 | >944.6 | 57 |
| 30'/ 180 °C | 50-60 | 100 | >10 | 0 | >944.6 | 58 |
| 25'/ 170 °C | 50-60 | 100 | 9.4-9.7 | 0 | 691.2 | 57 |
| 30'/ 170 °C | 50-70 | 100 | 9.8-10 | 0 | 806.4 | 58 |

Beispiel 10

Pigmentierter Lack

Nach dem beschriebenen Verfahren wurde der Pulverlack mit folgender Rezeptur hergestellt, appliziert und zwischen 170 und 200 °C eingebrannt.

431,0 Gew.-T. Polyester gemäß Beispiel B1
119,0 Gew.-T. Vernetzer gemäß Beispiel A9
400,0 Gew.-T. Weißpigment ($TiO_2$)
50,0 Gew.-T. Verlaufmittel-Masterbatch

| Einbrenn-bedingungen Zeit / Temp. | Mechanische Kenndaten SD | HB | ET | GS | Imp. rev. | GG 60°* |
|---|---|---|---|---|---|---|
| 12'/ 200 °C | 50-60 | 100 | 8.6-9.0 | 0 | >944.6 | 51 |
| 15'/ 200 °C | 40-50 | 100 | >10 | 0 | >944.6 | 49 |
| 20'/ 200 °C | 50-60 | 100 | 9.5->10 | 0 | >944.6 | 53 |
| 20'/ 180 °C | 40-50 | 100 | 9.0 | 0 | >944.6 | 50 |
| 25'/ 180 °C | 60 | 100 | 9.5-9.6 | 0 | 806.4 | 52 |
| 30'/ 180 °C | 50-60 | 100 | 9.8 | 0 | >944.6 | 52 |
| 25'/ 170 °C | 40-55 | 100 | 5.6-7.0 | 0 | 691.2 | 50 |
| 30'/ 170 °C | 50-60 | 100 | 7.0 | 0 | 806.4 | 53 |

Beispiel 11

Pigmentierter Lack

Nach dem beschriebenen Verfahren wurde der Pulverlack mit folgender Rezeptur hergestellt, appliziert und zwischen 180 und 200 °C eingebrannt.

409,2 Gew.-T. Polyester gemäß Beispiel B3
140,8 Gew.-T. Vernetzer gemäß Beispiel A11
400,0 Gew.-T. Weißpigment ($TiO_2$)
50,0 Gew.-T. Verlaufmittel-Masterbatch

| Einbrenn-bedingungen Zeit / Temp. | Mechanische Kenndaten SD | HB | ET | GS | Imp. rev. | GG 60°* |
|---|---|---|---|---|---|---|
| 15'/ 200 °C | 40-50 | 100 | 6.0-6.2 | 0 | 230.4 | 54 |
| 20'/ 200 °C | 40-50 | 100 | 5.3-6.0 | 0 | 230.4 | 58 |
| 25'/ 200 °C | 40-60 | 100 | 5.9-6.0 | 0 | 230.4 | 58 |
| 25'/ 180 °C | 50 | 100 | 3.7-4.2 | 0 | 115.2 | 56 |
| 30'/ 180 °C | 50-55 | 111 | 4.5-4.9 | 0 | 115.2 | 58 |

Beispiel 12

Pigmentierter Lack

Nach dem beschriebenen Verfahren wurde der Pulverlack mit folgender Rezeptur hergestellt, appliziert und zwischen 180 und 200 °C eingebrannt.

414,1 Gew.-T. Polyester gemäß Beispiel B1
135,9 Gew.-T. Vernetzer gemäß Beispiel A11
400,0 Gew.-T. Weißpigment ($TiO_2$)
50,0 Gew.-T. Verlaufmittel-Masterbatch

| Einbrenn-bedingungen | Mechanische Kenndaten | | | | | |
|---|---|---|---|---|---|---|
| Zeit / Temp. | SD | HB | ET | GS | Imp. rev. | GG 60°* |
| 15'/ 200 °C | 45-55 | 111 | 6.8-7.5 | 0 | 230.4 | 47 |
| 20'/ 200 °C | 50-60 | 111 | 5.5-6.2 | 0 | 345.6 | 46 |
| 25'/ 200 °C | 50-60 | 111 | 6.8-7.5 | 0 | 230.4 | 43 |
| 25'/ 180 °C | 50-60 | 111 | 3.5-3.7 | 0 | 115.2 | 45 |
| 30'/ 180 °C | 50 | 111 | 4.5-5.7 | 0 | 115.2 | 47 |

Beispiel 13

Pigmentierter Lack

Nach dem beschriebenen Verfahren wurde der Pulverlack mit folgender Rezeptur hergestellt, appliziert und zwischen 170 und 200 °C eingebrannt.

428,7 Gew.-T. Polyester gemäß Beispiel B1
121,3 Gew.-T. Vernetzer gemäß Beispiel A12
400,0 Gew.-T. Weißpigment ($TiO_2$)
50,0 Gew.-T. Verlaufmittel-Masterbatch

| Einbrenn-bedingungen | Mechanische Kenndaten | | | | | |
|---|---|---|---|---|---|---|
| Zeit / Temp. | SD | HB | ET | GS | Imp. rev. | GG 60°*) |
| 12'/ 200 °C | 50-60 | 100 | 9.1-9.5 | 0 | 806.4 | 47 |
| 15'/ 200 °C | 50-60 | 100 | >10 | 0 | >944.6 | 47 |
| 20'/ 200 °C | 50-60 | 100 | >10 | 0 | >944.6 | 48 |
| 20'/ 180 °C | 40-60 | 100 | 9.0-9.6 | 0 | 691.2 | 49 |
| 25'/ 180 °C | 45-60 | 100 | >10 | 0 | >944.6 | 50 |
| 30'/ 180 °C | 50-60 | 100 | 9.9->10 | 0 | >944.6 | 50 |
| 25'/ 170 °C | 50-65 | 100 | 8.7-9.3 | 0 | 691.6 | 51 |
| 30'/ 170 °C | 55-60 | 100 | 8.9-9.5 | 0 | 576.0 | 49 |

Beispiel 14

Pigmentierter Lack

Nach dem beschriebenen Verfahren wurde der Pulverlack mit folgender Rezeptur hergestellt, appliziert und zwischen 180 und 200 °C eingebrannt.

428,7 Gew.-T. Polyester gemäß Beispiel B1
121,3 Gew.-T. Vernetzer gemäß Beispiel A12
300,0 Gew.-T. Weißpigment ($TiO_2$)
50,0 Gew.-T. Verlaufmittel-Masterbatch
100,0 Gew.-T. DURCAL$^R$ 5

| Einbrenn-bedingungen Zeit / Temp. | Mechanische Kenndaten SD | HB | ET | GS | Imp. rev. | GG 60°* |
|---|---|---|---|---|---|---|
| 15'/ 200 °C | 50-60 | 100 | 7.5-8.2 | 0 | 345.6 | 40 |
| 20'/ 200 °C | 60-70 | 100 | 7.8-8.7 | 0 | 345.6 | 39 |
| 25'/ 200 °C | 50-70 | 100 | 8.0-8.6 | 0 | 460.8 | 42 |
| 25'/ 180 °C | 60-70 | 100 | 5.5-6.1 | 0 | 230.4 | 41 |
| 30'/ 180 °C | 50-60 | 100 | 6.2-7.0 | 0 | 345.6 | 40 |

Beispiel 15

Pigmentierter Lack

Nach dem beschriebenen Verfahren wurde der Pulverlack mit folgender Rezeptur hergestellt, appliziert und zwischen 170 und 200 °C eingebrannt.

425,2 Gew.-T. Polyester gemäß Beispiel B1
124,8 Gew.-T. Vernetzer gemäß Beispiel A13
400,0 Gew.-T. Weißpigment ($TiO_2$)
50,0 Gew.-T. Verlaufmittel-Masterbatch

| Einbrenn-bedingungen Zeit / Temp. | Mechanische Kenndaten SD | HB | ET | GS | Imp. rev. | GG 60°* |
|---|---|---|---|---|---|---|
| 12'/ 200 °C | 50-70 | 100 | 7.3-8.5 | 0 | >944.6 | 37 |
| 15'/ 200 °C | 40-50 | 100 | 7.5-8.2 | 0 | 806.4 | 35 |
| 20'/ 200 °C | 60 | 100 | 8.3-8.7 | 0 | 806.4 | 35 |
| 20'/ 180 °C | 40-50 | 100 | 6.8-7.0 | 0 | >944.6 | 40 |
| 25'/ 180 °C | 40-50 | 100 | 7.9-8.3 | 0 | 806.4 | 38 |
| 30'/ 180 °C | 40-50 | 111 | 8.4 | 0 | 806.4 | 39 |
| 25'/ 170 °C | 70-80 | 100 | 7.1-7.5 | 0 | 806.4 | 40 |
| 30'/ 170 °C | 60-65 | 100 | 8.5 | 0 | >944.6 | 36 |

Beispiel 16

Pigmentierter Lack

Nach dem beschriebenen Verfahren wurde der Pulverlack mit folgender Rezeptur hergestellt, appliziert und zwischen 170 und 200 °C eingebrannt.

426,4 Gew.-T. Polyester gemäß Beispiel B2
123,6 Gew.-T. Vernetzer gemäß Beispiel A13
400,0 Gew.-T. Weißpigment ($TiO_2$)
50,0 Gew.-T. Verlaufmittel-Masterbatch

| Einbrenn-bedingungen Zeit / Temp. | Mechanische Kenndaten SD | HB | ET | GS | Imp. rev. | GG 60°* |
|---|---|---|---|---|---|---|
| 12'/ 200 °C | 40-60 | 100 | 8.6-8.7 | 0 | >944.6 | 46 |
| 15'/ 200 °C | 50-60 | 125 | >10 | 0 | >944.6 | 42 |
| 20'/ 200 °C | 40-50 | 111 | >10 | 0 | >944.6 | 42 |
| 20'/ 180 °C | 40-50 | 111 | 7.8-8.0 | 0 | >944.6 | 48 |
| 25'/ 180 °C | 40-50 | 111 | >10 | 0 | >944.6 | 48 |
| 30'/ 180 °C | 40-50 | 111 | >10 | 0 | >944.6 | 46 |
| 25'/ 170 °C | 40-50 | 100 | 8.4-8.7 | 0 | >944.6 | 48 |
| 30'/ 170 °C | 45-60 | 100 | 8.7-8.8 | 0 | >944.6 | 49 |

Beispiel 17

Pigmentierter Lack

Nach dem beschriebenen Verfahren wurde der Pulverlack mit folgender Rezeptur hergestellt, appliziert und zwischen 170 und 200 °C eingebrannt.

420,8 Gew.-T. Polyester gemäß Beispiel B3
129,2 Gew.-T. Vernetzer gemäß Beispiel A13
400,0 Gew.-T. Weißpigment ($TiO_2$)
50,0 Gew.-T. Verlaufmittel-Masterbatch

| Einbrenn-bedingungen Zeit / Temp. | Mechanische Kenndaten SD | HB | ET | GS | Imp. rev. | GG 60°* |
|---|---|---|---|---|---|---|
| 12'/ 200 °C | 60-70 | 100 | 6.9-7.8 | 0 | 691.2 | 44 |
| 15'/ 200 °C | 50-70 | 100 | 7.2-8.0 | 0 | 806.4 | 42 |
| 20'/ 200 °C | 60-70 | 100 | 7.7-8.5 | 0 | 806.4 | 45 |
| 20'/ 180 °C | 50-60 | 100 | 6.2-6.9 | 0 | 691.2 | 43 |
| 25'/ 180 °C | 40-60 | 111 | 6.7-7.5 | 0 | 691.2 | 46 |
| 30'/ 180 °C | 50-65 | 100 | 8.0-8.3 | 0 | 806.4 | 45 |
| 25'/ 170 °C | 40-60 | 100 | 6.4-7.0 | 0 | 691.2 | 44 |
| 30'/ 170 °C | 50-60 | 111 | 7.5-8.1 | 0 | 860.4 | 45 |

Beispiel 18

Pigmentierter Lack

Nach dem beschriebenen Verfahren wurde der Pulverlack mit folgender Rezeptur hergestellt, appliziert und zwischen 170 und 200 °C eingebrannt.

425,2 Gew.-T. Polyester gemäß Beispiel B1
124,8 Gew.-T. Vernetzer gemäß Beispiel A13
300,0 Gew.-T. Weißpigment ($TiO_2$)
50,0 Gew.-T. Verlaufmittel-Masterbatch 100,0 Gew.-T. DURCAL® 5

| Einbrenn-bedingungen Zeit / Temp. | Mechanische Kenndaten SD | HB | ET | GS | Imp. rev. | GG 60°∢ |
|---|---|---|---|---|---|---|
| 12'/ 200 °C | 40-60 | 100 | 6.4-6.9 | 0 | 460.8 | 32 |
| 15'/ 200 °C | 50-60 | 100 | 6.8-7.5 | 0 | 576.0 | 34 |
| 20'/ 200 °C | 50-70 | 100 | 7.5-8.1 | 0 | 576.0 | 33 |
| 20'/ 180 °C | 60-70 | 100 | 6.1-6.4 | 0 | 345.6 | 31 |
| 25'/ 180 °C | 50-60 | 100 | 6.3-6.9 | 0 | 576.0 | 30 |
| 30'/ 180 °C | 50-60 | 100 | 7.0-7.8 | 0 | 691.2 | 33 |
| 25'/ 170 °C | 40-60 | 100 | 5.9-6.5 | 0 | 345.6 | 32 |
| 30'/ 170 °C | 50-70 | 100 | 7.0-7.2 | 0 | 460.8 | 33 |

Beispiel 19

Pigmentierter Lack

Nach dem beschriebenen Verfahren wurde der Pulverlack mit folgender Rezeptur hergestellt, appliziert und zwischen 170 und 200 °C eingebrannt.

423,9 Gew.-T. Polyester gemäß Beispiel B1
126,1 Gew.-T. Vernetzer gemäß Beispiel A14
400,0 Gew.-T. Weißpigment ($TiO_2$)
50,0 Gew.-T. Verlaufmittel-Masterbatch

| Einbrenn-bedingungen | Mechanische Kenndaten | | | | | |
|---|---|---|---|---|---|---|
| Zeit / Temp. | SD | HB | ET | GS | Imp. rev. | GG 60°* |
| 12'/ 200 °C | 55-65 | 111 | 5.6-6.5 | 0 | 345.6 | 29 |
| 15'/ 200 °C | 50-60 | 100 | 7.1-7.8 | 0 | 460.8 | 26 |
| 20'/ 200 °C | 60-65 | 111 | 7.0 | 0 | 345.6 | 26 |
| 20'/ 180 °C | 40-50 | 125 | 5.0 | 0 | 460.8 | 32 |
| 25'/ 180 °C | 50-60 | 100 | 5.8-7.0 | 0 | 360.4 | 28 |
| 30'/ 180 °C | 40-60 | 111 | 7.2-7.3 | 0 | 360.4 | 29 |
| 25'/ 170 °C | 50-60 | 111 | 5.2-5.4 | 0 | 230.4 | 29 |
| 30'/ 170 °C | 40-60 | 125 | 5.1-6.6 | 0 | 460.8 | 27 |

Beispiel 20

Pigmentierter Lack

Nach dem beschriebenen Verfahren wurde der Pulverlack mit folgender Rezeptur hergestellt, appliziert und zwischen 170 und 200 °C eingebrannt.

394,2 Gew.-T. Polyester gemäß Beispiel B1
125,8 Gew.-T. Vernetzer gemäß Beispiel A14
400,0 Gew.-T. Weißpigment ($TiO_2$)
50,0 Gew.-T. Verlaufmittel-Masterbatch
30,0 Gew.-T. Katalysator-Masterbatch

| Einbrenn-bedingungen Zeit / Temp. | Mechanische Kenndaten SD | HB | ET | GS | Imp. rev. | GG 60°* |
|---|---|---|---|---|---|---|
| 12'/ 200 °C | 40-60 | 100 | 6.4-6.8 | 0 | 460.8 | 24 |
| 15'/ 200 °C | 60-70 | 100 | 6.5-7.1 | 0 | 691.2 | 22 |
| 20'/ 200 °C | 40-60 | 111 | 7.4-8.0 | 0 | 691.2 | 23 |
| 20'/ 180 °C | 40-60 | 100 | 5.3-5.5 | 0 | 576.0 | 25 |
| 25'/ 180 °C | 40-60 | 100 | 6.4-8.0 | 0 | 460.8 | 26 |
| 30'/ 180 °C | 50-70 | 100 | 7.2-7.5 | 0 | 576.0 | 25 |
| 25'/ 170 °C | 50-60 | 100 | 5.2-5.9 | 0 | 345.6 | 23 |
| 30'/ 170 °C | 55-70 | 111 | 5.1-5.5 | 0 | 460.8 | 25 |

Beispiel 21

Pigmentierter Lack

Nach dem beschriebenen Verfahren wurde der Pulverlack mit folgender Rezeptur hergestellt, appliziert und zwischen 170 und 200 °C eingebrannt.

394,2 Gew.-T. Polyester gemäß Beispiel B1
125,8 Gew.-T. Vernetzer gemäß Beispiel A14
300,0 Gew.-T. Weißpigment ($TiO_2$)
50,0 Gew.-T. Verlaufmittel-Masterbatch
30,0 Gew.-T. Katalysator-Masterbatch
100,0 Gew.-T. DURCAL$^R$ 5

| Einbrenn-bedingungen Zeit / Temp. | Mechanische Kenndaten SD | HB | ET | GS | Imp. rev. | GG 60°* |
|---|---|---|---|---|---|---|
| 12'/ 200 °C | 50-60 | 100 | 6.1-6.3 | 0 | 230.4 | 20 |
| 15'/ 200 °C | 40-50 | 100 | 6.0-6.8 | 0 | 460.8 | 22 |
| 20'/ 200 °C | 50-65 | 111 | 6.9-7.3 | 0 | 345.6 | 20 |
| 20'/ 180 °C | 40-60 | 100 | 5.0-5.2 | 0 | 345.6 | 19 |
| 25'/ 180 °C | 50-70 | 111 | 5.8-6.0 | 0 | 460.8 | 21 |
| 30'/ 180 °C | 45-60 | 100 | 6.5-7.1 | 0 | 460.8 | 20 |
| 25'/ 170 °C | 50-70 | 100 | 4.4-5.4 | 0 | 230.4 | 22 |
| 30'/ 170 °C | 40-60 | 100 | 5.6-5.7 | 0 | 230.4 | 23 |

Beispiel 22

Pigmentierter Lack

Nach dem beschriebenen Verfahren wurde der Pulverlack mit folgender Rezeptur hergestellt, appliziert und zwischen 160 und 200 °C eingebrannt.

425,4 Gew.-T. Polyester gemäß Beispiel B1
124,6 Gew.-T. Vernetzer gemäß Beispiel A15
400,0 Gew.-T. Weißpigment ($TiO_2$)
50,0 Gew.-T. Verlaufmittel-Masterbatch

| Einbrenn-bedingungen Zeit / Temp. | Mechanische Kenndaten SD | HB | ET | GS | Imp. rev. | GG 60°*) |
|---|---|---|---|---|---|---|
| 12'/ 200 °C | 60-70 | 100 | 5.8-6.0 | 0 | 806.4 | 41 |
| 15'/ 200 °C | 80 | 100 | 7.5-7.6 | 0 | 806.4 | 38 |
| 20'/ 200 °C | 70 | 100 | 7.3-7.8 | 0 | 806.4 | 38 |
| 20'/ 180 °C | 60-80 | 111 | 5.2-6.9 | 0 | 806.4 | 37 |
| 25'/ 180 °C | 60-70 | 100 | 8.2-8.4 | 0 | 806.4 | 39 |
| 30'/ 180 °C | 70 | 100 | 8.1-8.3 | 0 | 806.4 | 37 |
| 25'/ 170 °C | 60 | 111 | 5.2-6.0 | 0 | 576.0 | 41 |
| 30'/ 170 °C | 60-70 | 111 | 6.0-6.3 | 0 | 460.8 | 39 |
| 35'/ 160 °C | 45-55 | 100 | 6.4-6.8 | 0 | 691.2 | 45 |

Beispiel 23

Pigmentierter Lack

Nach dem beschriebenen Verfahren wurde der Pulverlack mit folgender Rezeptur hergestellt, appliziert und zwischen 170 und 200 °C eingebrannt.

390,9 Gew.-T. Polyester gemäß Beispiel B3
129,1 Gew.-T. Vernetzer gemäß Beispiel A15
400,0 Gew.-T. Weißpigment ($TiO_2$)
50,0 Gew.-T. Verlaufmittel-Masterbatch
30,0 Gew.-T. Katalysator-Masterbatch

| Einbrenn-bedingungen Zeit / Temp. | Mechanische Kenndaten SD | HB | ET | GS | Imp. rev. | GG 60°*) |
|---|---|---|---|---|---|---|
| 12'/ 200 °C | 40-65 | 111 | 6.5-7.0 | 0 | 576.0 | 48 |
| 15'/ 200 °C | 40-50 | 100 | 6.5-6.7 | 0 | 691.2 | 44 |
| 20'/ 200 °C | 55-65 | 100 | 6.7-7.1 | 0 | 691.2 | 45 |
| 20'/ 180 °C | 40-60 | 125 | 6.5-6.7 | 0 | 576.0 | 47 |
| 25'/ 180 °C | 60-75 | 111 | 5.9-6.1 | 0 | 460.8 | 49 |
| 30'/ 180 °C | 40-55 | 111 | 5.8-6.4 | 0 | 576.0 | 50 |
| 25'/ 170 °C | 50-60 | 100 | 4.9-5.5 | 0 | 230.4 | 47 |
| 30'/ 170 °C | 45-50 | 111 | 5.0-6.1 | 0 | 345.6 | 48 |

Beispiel 24

Pigmentierter Lack

Nach dem beschriebenen Verfahren wurde der Pulverlack mit folgender Rezeptur hergestellt, appliziert und zwischen 170 und 200 °C eingebrannt.

414,6 Gew.-T. Polyester gemäß Beispiel B4
105,4 Gew.-T. Vernetzer gemäß Beispiel A15
400,0 Gew.-T. Weißpigment ($TiO_2$)
50,0 Gew.-T. Verlaufmittel-Masterbatch
30,0 Gew.-T. Katalysator-Masterbatch

| Einbrenn-bedingungen Zeit / Temp. | Mechanische Kenndaten SD | HB | ET | GS | Imp. rev. | GG 60°* |
|---|---|---|---|---|---|---|
| 12'/ 200 °C | 50-60 | 111 | 6.0-6.3 | 0 | 806.4 | 42 |
| 15'/ 200 °C | 50-55 | 100 | 6.2-6.5 | 0 | 806.4 | 41 |
| 20'/ 200 °C | 65-70 | 100 | 6.0-6.9 | 0 | 806.4 | 43 |
| 20'/ 180 °C | 40-50 | 125 | 5.5-6.1 | 0 | 806.4 | 40 |
| 25'/ 180 °C | 55-60 | 111 | 6.0-6.4 | 0 | 691.2 | 46 |
| 30'/ 180 °C | 45-60 | 111 | 6.2-6.7 | 0 | 806.4 | 45 |
| 25'/ 170 °C | 40-50 | 100 | 4.8-5.5 | 0 | 460.8 | 45 |
| 30'/ 170 °C | 45-60 | 100 | 5.0-5.7 | 0 | 576.0 | 46 |

Beispiel 25

Pigmentierter Lack

Nach dem beschriebenen Verfahren wurde der Pulverlack mit folgender Rezeptur hergestellt, appliziert und zwischen 160 und 200 °C eingebrannt.

433,1 Gew.-T. Polyester gemäß Beispiel B1
116,9 Gew.-T. Vernetzer gemäß Beispiel A16
400,0 Gew.-T. Weißpigment ($TiO_2$)
50,0 Gew.-T. Verlaufmittel-Masterbatch

| Einbrenn-bedingungen | Mechanische Kenndaten | | | | | |
|---|---|---|---|---|---|---|
| Zeit / Temp. | SD | HB | ET | GS | Imp. rev. | GG 60°∢ |
| 12'/ 200 °C | 40-60 | 100 | 8.7-9.2 | 0 | 806.4 | 46 |
| 15'/ 200 °C | 60-80 | 111 | 9.5-9.7 | 0 | >944.6 | 44 |
| 20'/ 200 °C | 60 | 111 | 9.6-9.7 | 0 | >944.6 | 44 |
| 20'/ 180 °C | 60 | 100 | 8.3-9.0 | 0 | 806.4 | 48 |
| 25'/ 180 °C | 60 | 100 | 9.0-9.4 | 0 | 806.4 | 46 |
| 30'/ 180 °C | 60-70 | 100 | 8.9-9.8 | 0 | >944.6 | 46 |
| 25'/ 170 °C | 50-60 | 100 | 8.4-9.0 | 0 | 806.4 | 48 |
| 30'/ 170 °C | 50-60 | 100 | 9.0-9.2 | 0 | >944.6 | 48 |
| 35'/ 160 °C | 50-60 | 100 | 6.3-7.4 | 0 | 691.2 | 48 |

## Beispiel 26

Pigmentierter Lack

Nach dem beschriebenen Verfahren wurde der Pulverlack mit folgender Rezeptur hergestellt, appliziert und zwischen 170 und 200 °C eingebrannt.

428,9 Gew.-T. Polyester gemäß Beispiel B3
121,1 Gew.-T. Vernetzer gemäß Beispiel A16
400,0 Gew.-T. Weißpigment ($TiO_2$)
50,0 Gew.-T. Verlaufmittel-Masterbatch

| Einbrenn-bedingungen Zeit / Temp. | Mechanische Kenndaten SD | HB | ET | GS | Imp. rev. | GG 60°* |
|---|---|---|---|---|---|---|
| 12'/ 200 °C | 50-60 | 100 | 7.1-8.0 | 0 | 691.2 | 51 |
| 15'/ 200 °C | 40-60 | 100 | 8.2-8.8 | 0 | 576.0 | 53 |
| 20'/ 200 °C | 45-55 | 100 | 8.5-9.3 | 0 | 806.4 | 52 |
| 20'/ 180 °C | 60-70 | 100 | 7.1-7.8 | 0 | 576.0 | 54 |
| 25'/ 180 °C | 50-60 | 100 | 8.4-8.9 | 0 | 691.2 | 50 |
| 30'/ 180 °C | 50-65 | 100 | 9.0-9.2 | 0 | 806.4 | 52 |
| 25'/ 170 °C | 45-60 | 100 | 7.5-7.7 | 0 | 576.0 | 51 |
| 30'/ 170 °C | 50-60 | 100 | 8.3-8.5 | 0 | 576.0 | 54 |

Beispiel 27

Pigmentierter Lack

Nach dem beschriebenen Verfahren wurde der Pulverlack mit folgender Rezeptur hergestellt, appliziert und zwischen 160 und 200 °C eingebrannt.

441,0 Gew.-T. Polyester gemäß Beispiel B1
109,0 Gew.-T. Vernetzer gemäß Beispiel A17
400,0 Gew.-T. Weißpigment ($TiO_2$)
50,0 Gew.-T. Verlaufmittel-Masterbatch

| Einbrenn-bedingungen Zeit / Temp. | Mechanische Kenndaten SD | HB | ET | GS | Imp. rev. | GG 60°∡ |
|---|---|---|---|---|---|---|
| 12'/ 200 °C | 40-50 | 100 | 8.0-8.3 | 0 | >944.6 | 50 |
| 15'/ 200 °C | 60-70 | 100 | 8.3-8.9 | 0 | >944.6 | 48 |
| 20'/ 200 °C | 40-50 | 100 | 9.3->10 | 0 | >944.6 | 47 |
| 20'/ 180 °C | 60 | 100 | 9.2-9.7 | 0 | >944.6 | 50 |
| 25'/ 180 °C | 40-65 | 100 | 9.4->10 | 0 | >944.6 | 51 |
| 30'/ 180 °C | 40-60 | 100 | 9.5-9.9 | 0 | >944.6 | 49 |
| 25'/ 170 °C | 40-60 | 100 | 9.0-9.5 | 0 | >944.6 | 51 |
| 30'/ 170 °C | 60-70 | 100 | 9.2-9.9 | 0 | >944.6 | 51 |
| 35'/ 160 °C | 40-50 | 100 | 8.0-8.1 | 0 | >944.6 | 51 |

Beispiel 28

Pigmentierter Lack

Nach dem beschriebenen Verfahren wurde der Pulverlack mit folgender Rezeptur hergestellt, appliziert und zwischen 170 und 200 °C eingebrannt.

457,9 Gew.-T. Polyester gemäß Beispiel B4
92,1 Gew.-T. Vernetzer gemäß Beispiel A17
400,0 Gew.-T. Weißpigment ($TiO_2$)
50,0 Gew.-T. Verlaufmittel-Masterbatch

| Einbrenn-bedingungen Zeit / Temp. | Mechanische Kenndaten SD | HB | ET | GS | Imp. rev. | GG 60°* |
|---|---|---|---|---|---|---|
| 12'/ 200 °C | 40-50 | 100 | 8.5-8.7 | 0 | 691.2 | 52 |
| 15'/ 200 °C | 50-60 | 111 | 8.2-9.0 | 0 | 806.4 | 55 |
| 20'/ 200 °C | 40-50 | 100 | 9.1-9.4 | 0 | 806.4 | 51 |
| 20'/ 180 °C | 50-65 | 100 | 7.9-8.5 | 0 | 576.0 | 53 |
| 25'/ 180 °C | 55-65 | 100 | 8.3-8.9 | 0 | 576.0 | 50 |
| 30'/ 180 °C | 40-55 | 111 | 8.7-9.6 | 0 | 806.4 | 52 |
| 25'/ 170 °C | 40-60 | 100 | 5.7-6.2 | 0 | 460.8 | 52 |
| 30'/ 170 °C | 50-60 | 100 | 7.1-7.7 | 0 | 576.0 | 51 |

Beispiel 29

Pigmentierter Lack

Nach dem beschriebenen Verfahren wurde der Pulverlack mit folgender Rezeptur hergestellt, appliziert und zwischen 170 und 200 °C eingebrannt.

427,6 Gew.-T. Polyester gemäß Beispiel B4
122,4 Gew.-T. Vernetzer gemäß Beispiel A18
400,0 Gew.-T. Weißpigment ($TiO_2$)
50,0 Gew.-T. Verlaufmittel-Masterbatch

| Einbrenn-bedingungen Zeit / Temp. | Mechanische Kenndaten SD | HB | ET | GS | Imp. rev. | GG 60°* |
|---|---|---|---|---|---|---|
| 12'/ 200 °C | 50-60 | 100 | 7.5-8.0 | 0 | 806.4 | 53 |
| 15'/ 200 °C | 50-60 | 100 | 7.7-8.3 | 0 | >944.6 | 53 |
| 20'/ 200 °C | 40-55 | 100 | 7.8-9.0 | 0 | 806.4 | 53 |
| 20'/ 180 °C | 70 | 111 | 7.6-7.7 | 0 | 691.2 | 56 |
| 25'/ 180 °C | 40-50 | 111 | 7.9-8.4 | 0 | >944.6 | 54 |
| 30'/ 180 °C | 50-60 | 100 | 7.9-8.6 | 0 | >944.6 | 53 |
| 25'/ 170 °C | 65-70 | 100 | 7.6-7.8 | 0 | 576.0 | 56 |
| 30'/ 170 °C | 55-60 | 100 | 8.4-8.8 | 0 | 691.2 | 57 |

Beispiel 30

Pigmentierter Lack

Nach dem beschriebenen Verfahren wurde der Pulverlack mit folgender Rezeptur hergestellt, appliziert und zwischen 170 und 200 °C eingebrannt.

423,2 Gew.-T. Polyester gemäß Beispiel B3
126,8 Gew.-T. Vernetzer gemäß Beispiel A18
400,0 Gew.-T. Weißpigment ($TiO_2$)
50,0 Gew.-T. Verlaufmittel-Masterbatch

| Einbrenn-bedingungen | Mechanische Kenndaten | | | | | |
|---|---|---|---|---|---|---|
| Zeit / Temp. | SD | HB | ET | GS | Imp. rev. | GG 60°⚹ |
| 12'/ 200 °C | 40-60 | 100 | 6.9-7.2 | 0 | 691.2 | 59 |
| 15'/ 200 °C | 50-60 | 100 | 7.4-7.9 | 0 | 691.2 | 58 |
| 20'/ 200 °C | 50-70 | 100 | 8.2-8.6 | 0 | 806.4 | 60 |
| 20'/ 180 °C | 45-60 | 100 | 7.0-7.2 | 0 | 576.0 | 60 |
| 25'/ 180 °C | 50-60 | 100 | 7.4-7.7 | 0 | 691.2 | 57 |
| 30'/ 180 °C | 50-65 | 100 | 7.2-8.0 | 0 | 691.2 | 59 |
| 25'/ 170 °C | 40-60 | 100 | 6.9-7.2 | 0 | 691.2 | 60 |
| 30'/ 170 °C | 50-60 | 100 | 7.5-7.8 | 0 | 806.4 | 61 |

Beispiel 31

Pigmentierter Lack

Nach dem beschriebenen Verfahren wurde der Pulverlack mit folgender Rezeptur hergestellt, appliziert und zwischen 170 und 200 °C eingebrannt.

432,1 Gew.-T. Polyester gemäß Beispiel B1
117,9 Gew.-T. Vernetzer gemäß Beispiel A19
400,0 Gew.-T. Weißpigment ($TiO_2$)
50,0 Gew.-T. Verlaufmittel-Masterbatch

| Einbrenn-bedingungen Zeit / Temp. | Mechanische Kenndaten SD | HB | ET | GS | Imp. rev. | GG 60°* |
|---|---|---|---|---|---|---|
| 12'/ 200 °C | 60-70 | 100 | 8.1-8.8 | 0 | >944.6 | 64 |
| 15'/ 200 °C | 50-60 | 100 | 8.6-9.8 | 0 | >944.6 | 61 |
| 20'/ 200 °C | 55-60 | 100 | 9.6-9.8 | 0 | >944.6 | 61 |
| 20'/ 180 °C | 65-80 | 111 | 7.5-8.6 | 0 | >944.6 | 66 |
| 25'/ 180 °C | 55-60 | 100 | 9.0-9.7 | 0 | >944.6 | 64 |
| 30'/ 180 °C | 60 | 100 | 9.0-9.6 | 0 | >944.6 | 65 |
| 25'/ 170 °C | 65-70 | 111 | 8.4-8.8 | 0 | >944.6 | 66 |
| 30'/ 170 °C | 70-80 | 111 | 8.8-9.1 | 0 | 806.4 | 67 |

Beispiel 32 (Vergleich)

Pigmentierter Lack

Nach dem beschriebenen Verfahren wurde der Pulverlack mit folgender Rezeptur hergestellt, appliziert und zwischen 180 und 200 °C eingebrannt.

745,7 Gew.-T. Polyester gemäß Beispiel B1
354,3 Gew.-T. Vernetzer gemäß Beispiel A20
800,0 Gew.-T. Weißpigment ($TiO_2$)
100,0 Gew.-T. Verlaufmittel-Masterbatch

| Einbrenn-bedingungen Zeit / Temp. | Mechanische Kenndaten SD | HK | HB | ET | GS | Imp. rev. | GG 60°∢ |
|---|---|---|---|---|---|---|---|
| 15'/ 200 °C | 60 | 177 | 111 | 9.5-9.6 | 0 | 806.4 | 85 |
| 20'/ 200 °C | 70-80 | 182 | 111 | 9.7-10 | 0 | 806.4 | 86 |
| 25'/ 200 °C | 60-65 | 183 | 100 | >10 | 0 | >944.6 | 85 |
| 20'/ 180 C | 50-60 | 183 | 111 | 9.0-9.7 | 0 | 806.4 | 85 |
| 25'/ 180°C | 60-70 | 185 | 111 | 10 | 0 | >944.6 | 85 |
| 30'/ 180°C | 50-60 | 185 | 111 | >10 | 0 | >944.6 | 86 |

Beispiel 33 (Vergleich)

Pigmentierter Lack

Nach dem beschriebenen Verfahren wurde der Pulverlack mit folgender Rezeptur hergestellt, appliziert und zwischen 170 und 200 °C eingebrannt.

820,0 Gew.-T. Polyester gemäß Beispiel B1
280,0 Gew.-T. Vernetzer gemäß Beispiel A21
800,0 Gew.-T. Weißpigment ($TiO_2$)
100,0 Gew.-T. Verlaufmittel-Masterbatch

| Einbrenn-bedingungen Zeit / Temp. | Mechanische Kenndaten SD | HK | HB | ET | GS | Imp. rev. | GG 60° |
|---|---|---|---|---|---|---|---|
| 10'/ 200 °C | 60-70 | 184 | 111 | 9.0-9.3 | 0 | >944.6 | 88 |
| 12'/ 200 °C | 60-70 | 185 | 111 | 9.6-10 | 0 | >944.6 | 90 |
| 15'/ 200 °C | 60-75 | 179 | 111 | >10 | 0 | >944.6 | 91 |
| 15'/ 180 C | 60-80 | 180 | 111 | 9.4-9.5 | 0 | >944.6 | 89 |
| 20'/ 180°C | 70-80 | 181 | 111 | >10 | 0 | >944.6 | 91 |
| 25'/ 180°C | 60-80 | 187 | 111 | 9.7-9.9 | 0 | >944.6 | 90 |
| 25'/ 170 °C | 60 | 186 | 100 | 9.2-9.7 | 0 | >944.6 | 89 |
| 30'/ 170 °C | 70-80 | 185 | 111 | 9.6-9.9 | 0 | >944.6 | 90 |

Beispiel 34 (Vergleich)

Pigmentierter Lack

Nach dem beschriebenen Verfahren wurde der Pulverlack mit folgender Rezeptur hergestellt, appliziert und zwischen 170 und 200 °C eingebrannt.

418,1 Gew.-T. Polyester gemäß Beispiel B2
131,9 Gew.-T. Vernetzer gemäß Beispiel A22
400,0 Gew.-T. Weißpigment ($TiO_2$)
50,0 Gew.-T. Verlaufmittel-Masterbatch

| Einbrenn-bedingungen | Mechanische Kenndaten | | | | | | |
|---|---|---|---|---|---|---|---|
| Zeit / Temp. | SD | HK | HB | ET | GS | Imp. rev. | GG 60° |
| 10'/ 200 °C | 70-80 | 209 | 111 | 9.2-9.9 | 0 | 460.8 | 86 |
| 12'/ 200 °C | 70-80 | 206 | 111 | >10 | 0 | >944.6 | 89 |
| 15'/ 200 °C | 70-80 | 196 | 125 | >10 | 0 | >944.6 | 88 |
| 15'/ 180 C | 60-80 | 208 | 125 | 9.2-9.8 | 0 | 576.0 | 89 |
| 20'/ 180°C | 70-80 | 202 | 111 | >10 | 0 | >944.6 | 88 |
| 25'/ 180°C | 60-70 | 194 | 111 | >10 | 0 | 944.6 | 89 |
| 20'/ 170 °C | 60-70 | 200 | 111 | 8.4-8.9 | 0 | 460.8 | 89 |
| 25'/ 170 °C | 70-80 | 198 | 111 | 9.4-9.6 | 0 | 691.2 | 90 |

Beispiel 35 (Vergleich)

Pigmentierter Lack

Nach dem beschriebenen Verfahren wurde der Pulverlack mit folgender Rezeptur hergestellt, appliziert und zwischen 170 und 200 °C eingebrannt.

412,2 Gew.-T. Polyester gemäß Beispiel B3
137,8 Gew.-T. Vernetzer gemäß Beispiel A22
400,0 Gew.-T. Weißpigment ($TiO_2$)
50,0 Gew.-T. Verlaufmittel-Masterbatch

| Einbrenn-bedingungen Zeit / Temp. | Mechanische Kenndaten SD | HK | HB | ET | GS | Imp. rev. | GG 60°* |
|---|---|---|---|---|---|---|---|
| 10'/ 200 °C | 70-80 | 191 | 111 | 9.0 | 0 | 460.8 | 85 |
| 12'/ 200 °C | 60-70 | 199 | 111 | 8.6-10 | 0 | 691.2 | 88 |
| 15'/ 200 °C | 60-70 | 193 | 111 | >10 | 0 | >944.6 | 86 |
| 15'/ 180 C | 80 | 195 | 111 | 7.5-8.0 | 0 | 460.8 | 86 |
| 20'/ 180°C | 70-80 | 193 | 125 | 9.1->10 | 0 | 691.2 | 86 |
| 25'/ 180°C | 60 | 192 | 125 | >10 | 0 | >944.6 | 86 |
| 20'/ 170 °C | 60-70 | 190 | 111 | 6.3-6.9 | 0 | 345.6 | 87 |
| 25'/ 170 °C | 70-80 | 189 | 111 | 7.8-8.5 | 0 | 576.0 | 85 |

Beispiel 36 (Vergleich)

Pigmentierter Lack

Nach dem beschriebenen Verfahren wurde der Pulverlack mit folgender Rezeptur hergestellt, appliziert und zwischen 180 und 200 °C eingebrannt.

380,0 Gew.-T. Polyester gemäß Beispiel B1
170,0 Gew.-T. Vernetzer gemäß Beispiel A23
400,0 Gew.-T. Weißpigment ($TiO_2$)
50,0 Gew.-T. Verlaufmittel-Masterbatch

| Einbrenn-bedingungen Zeit / Temp. | Mechanische Kenndaten SD | HK | HB | ET | GS | Imp. rev. | GG 60°* |
|---|---|---|---|---|---|---|---|
| 10'/ 200 °C | 50-60 | 174 | 111 | 9.2-9.6 | 0 | 806.4 | 83 |
| 12'/ 200 °C | 60-75 | 183 | 111 | 9.7-9.9 | 0 | 806.4 | 84 |
| 15'/ 200 °C | 60-70 | 183 | 111 | 9.2-10 | 0 | >944.6 | 86 |
| 20'/ 180 C | 60-70 | 184 | 111 | 8.6-9.3 | 0 | 806.4 | 85 |
| 25'/ 180°C | 60-70 | 174 | 111 | 9.7-10 | 0 | >944.6 | 85 |
| 30'/ 180°C | 50-60 | 181 | 111 | 10 | 0 | >944.6 | 82 |

<u>Beispiel 37</u> (Vergleich)

Pigmentierter Lack

Nach dem beschriebenen Verfahren wurde der Pulverlack mit folgender Rezeptur hergestellt, appliziert und zwischen 180 und 200 °C eingebrannt.

388,7 Gew.-T. Polyester gemäß Beispiel B2
161,3 Gew.-T. Vernetzer gemäß Beispiel A23
400,0 Gew.-T. Weißpigment ($TiO_2$)
50,0 Gew.-T. Verlaufmittel-Masterbatch

| Einbrenn-bedingungen Zeit / Temp. | Mechanische Kenndaten SD | HK | HB | ET | GS | Imp. rev. | GG 60°* |
|---|---|---|---|---|---|---|---|
| 15'/ 200 °C | 40-50 | 179 | 111 | 9.0-9.8 | 0 | >944.6 | 85 |
| 20'/ 200 °C | 50-60 | 181 | 125 | 9.5->10 | 0 | >944.6 | 83 |
| 25'/ 200 °C | 40-50 | 185 | 125 | 9.9-10 | 0 | >944.6 | 85 |
| 20'/ 180 C | 40-50 | 180 | 111 | 8.6-9.0 | 0 | >944.6 | 85 |
| 25'/ 180°C | 40-65 | 179 | 125 | 9.2-9.9 | 0 | >944.6 | 84 |
| 30'/ 180°C | 50 | 181 | 111 | 9.5-9.8 | 0 | >944.6 | 85 |

## Ansprüche

1. PUR-Pulverlacke, die nach Aushärtung eine matte Oberfläche ergeben und folgende Bindemittelkomponenten enthalten:

A als Isocyanatkomponente

A1 mit Epsilon-Caprolactam blockierte Addukte aus trans-1,4-Cyclohexandiisocyanat und Diolen und/oder Triolen und/oder

A2 ein mit Epsilon-Caprolactam blockiertes Trimerisat des trans-1,4-Cyclohexandiisocyanats,

A3 0-50 Gew.-% - bezogen auf die Gewichtsmenge der Komponenten A1 und A2 - mit Epsilon-Caprolactam blockiertes trans-1,4-Cyclohexandiisocyanat und/oder Isophorondiisocyanat und

B als Alkoholkomponente aus der PUR-Chemie bekannte OH-Gruppen aufweisende Polymere.

2. PUR-Pulverlacke nach Anspruch 1,
dadurch gekennzeichnet,
daß die Komponente A1 unter Verwendung von folgenden Diolen hergestellt wird

a) HO - $(CH_2)_n$ -OH mit $2 \leq n \leq 12$

b) HO - $[-(CH_2)_p -O]_m$ -H mit m = 2,3 und p = 2, 3 und 4.

3. PUR-Pulverlacke nach Anspruch 1,
dadurch gekennzeichnet,
daß die Komponente A1 unter Verwendung von Trimethylolpropan hergestellt worden ist.

4. PUR-Pulverlacke nach Anspruch 1,
dadurch gekennzeichnet,
daß man als Isocyanatkomponente das Reaktionsprodukt der Umsetzung von trans-1,4-Cyclohexandiisocyanat (CHDI) mit

- Diolen und/oder Triolen und
- Epsilon-Caprolactam,

wobei das NCO/OH-Äquivalentverhältnis einen Wert x mit $2 \leq x \leq 7$ und das NH/NCO-Äquivalentverhältnis den Wert y mit $0{,}8 \leq y \leq 1$ aufweist, einsetzt.

5. PUR-Pulverlacke nach Anspruch 1,
dadurch gekennzeichnet,
daß man als Isocyanatkomponente das Reaktionsprodukt der Umsetzung eines durch Trimerisierung erhaltenen CHDI-Isocyanurats mit einem NCO-Gehalt von 25 bis 40 % mit Epsilon-Caprolactam einsetzt, wobei das NH/NCO-Äquivalentverhältnis den Wert z mit $0{,}8 \leq z \leq 1{,}0$ aufweist.

6. PUR-Pulverlacke nach den Ansprüchen 1 bis 5,
dadurch gekennzeichnet,
daß das OH/NCO-Verhältnis von dem OH-Gruppen aufweisenden Polymer B zur Isocyanatkomponente A 1 : 0,9 bis 1 : 1,1 beträgt.

7. PUR-Pulverlacke nach den Ansprüchen 1 bis 6,
dadurch gekennzeichnet,
daß als Alkoholkomponente B Polyester mit einem Schmelzpunkt von 70 bis 120 °C eingesetzt werden.